# EUROPÄISCHE PATENTSCHRIFT

(11) **EP 0 320 891 B1**
(45) Veröffentlichungstag und Bekanntmachung des Hinweises auf die Patenterteilung: **03.11.1993**
(21) Anmeldenummer: 88120844.1
(22) Anmeldetag: 14.12.1988
(51) Int. Cl.: H01R 13/52, H02G 3/22

(54) **Abgedichtete Durchführung oder Einführung, Verfahren zu ihrer Herstellung und zur Herstellung eines längsdichten Zuleitungsbündels zu einer Vorrichtung**
Water-tight cable feedthrough or inlet, its manufacturing process and manufacture process of a longitudinally water-tight transmission bundle in a device
Traversée ou entrée de câble étanche, méthode pour sa fabrication et la fabrication d'un faisceau de transmission étanche longitudinalement dans un dispositif

(30) Priorität: 17.12.1987 DE 3742731
(43) Veröffentlichungstag der Anmeldung: 21.06.1989
(73) Patentinhaber: Delphi Automotive Systems Deutschland GmbH, D-42369 Wuppertal (DE)
(72) Erfinder: Ebersberg, Rüdiger, Dipl.-Ing., D-4650 Gelsenkirchen (DE); Lamers, Joachim, Dipl.-Ing., D-5600 Wuppertal 2 (DE)
(74) Vertreter: Priebisch, Rüdiger

(56) Entgegenhaltungen:
- DE-A- 1 158 643
- DE-A- 2 209 629
- DE-A- 3 322 809
- DE-A- 3 431 617

## Beschreibung

Die Erfindung betrifft eine Verfahren zur Herstellung einer abgedichteten Durch- oder Einführung nach der Präambel des Patentanspruches 1 und ein Verfahren zur Herstellung eines längsdichten Zuleitungsbündels unter Verwendung eines derartigen Verfahrens.

Längsdichte Zuleitungen, z. B. zu wasserdichten Steckverbindern, werden bei der Verdrahtung mit sogenannten Leitungssätzen gefordert, z. B. bei Automobilen, Haushaltsgeräten und dergleichen. Die Leitungssätze bestehen aus Leitungsbündeln aus mehreren einzelnen Leitungen, die jeweils einen oder mehrere isolierte Leiter umfassen. Die Einzelleiter sind mit Anschlußkontakten versehen, die oft zu Mehrfachsteckverbindern zusammengefaßt sind.

Die einzelnen Leitungsbündel werden manchmal durch Trennwände geführt, manchmal auch mit wasserdichten Steckverbindern versehen. An diesen Durch- oder Einführungsstellen muß das Leitungsbündel so abgedichtet sein, daß in Längsrichtung der Leitungen kein Wasser durchdringen kann; diese Stellen müssen demnach längswasserdicht sein.

Es ist bekannt, solche Leitungsbündel an diesen exponierten Stellen mit einer Kunststoffmasse zu umspritzen. Dabei dringt die Spritzmasse auch teils in die Zwickel zwischen den einzelnen Leitern ein; je dicker das Leitungsbündel jedoch ist, und je mehr Einzelleitungen es umfaßt, desto mehr innenliegende Zwickel bleiben frei von Spritzmasse, so daß die Längswasserdichtheit nicht mehr gewährleistet ist, vergleiche DE 34 31 617 A1, Figure 2.

Die DE-AS 11 58 643 , die ein Verfahren nach der Präambel des Patentanspruchs 1 offenbart, zeigt einen temperaturbeständigen und harten Kunststoff , der in einen Griffkörper eingegossen wird. Die radiale und axiale Fixierung des Leitungsbündels erfolgt durch das Griffstück, das als Gießform dient, mit Hilfe des Abstandhalters. Das Ergebnis ist ein Griffstück, das zwar dicht, jedoch starr ausgebildet ist.

Der Erfindung lag die Aufgabe zugrunde, bei Anwendungsfällen der genannten und ähnlicher Art verfahrenstechnisch die Längswasserdichtheit an den umspritzten Stellen zu gewährleisten und gleichzeitig einen guten Biegeschutz im Ein-/Durchführungsbereich sicherzustellen.

Die Erfindung löst diese Aufgabe mit den Verfahrensschritten des Patentanspruches 1. Vorteilhafte Ausbildungen der Erfindung sind in den Unteransprüchen aufgezeigt.

Aus der DE-PS 22 09 629 ist es bekannt, bei längsgeteilten Kabelmuffen eine dichte Einführung zweier Kabel zu erzielen, indem das Dichtungsmaterial die Form bereits vorgeformter, den Dichtungsraum ausfüllender scheibenförmiger Füllstücke aufweist und diese Füllstücke zwei von ihrem Umfang ausgehende Aussparungen zum Einlegen der abzudichtenden Kabel besitzen. Bei der Erfindung kann zwar das Spreizglied eine ähnliche Form wie das dort gezeigte Füllstück aufweisen; das Füllstück stellt jedoch die Dichtung an sich dar, während bei der Erfindung die Abdichtfunktion vom umspritzten Material übernommen wird, da das Spreizglied ganz vom Spritzmaterial umgeben ist.

Die Erfindung stellt sicher, daß die Einzelelemente des Leitungsbündels im Bereich der Umspritzung völlig, d. h. über den gesamten Querschnitt, mit Spritzmasse umgeben sind. Nicht nur die äußeren, sondern auch die inneren Zwickel (Zwischenräume) sind mit Spritzmasse ausgefüllt, so daß kein Hohlraum verbleibt, durch den Wasser oder dergleichen längs der Leitungen ein- bzw. durchdringen kann.

Die Erfindung ist anwendbar sowohl bei der Herstellung einer längsdichten Durch- oder Einführung, als auch bei der Herstellung einer gebündelten Zuleitung, bei der eine derartige längsdichte Einführung Verwendung finden kann. In jedem Fall ist eine gute Biegeschutzwirkung im Durch- bzw. Einführungsbereich erzielt.

In der Zeichnung ist ein Ausführungsbeispiel einer nach dem erfindungsgemäßen Verfahren herstellten Durchführung dargestellt, das im nachfolgenden näher beschrieben wird.

Figur 1 zeigt einen gespritzten Stopfen im Längsschnitt, der vier einzelne isolierte Adern umhüllt.

Figur 2 zeigt einen Schnitt durch den Stopfen im Bereich des Spreizgliedes gemäß der Linie II-II Figur 1.

Figur 3 zeigt einen Schnitt durch den Stopfen im Bereich unmittelbar neben dem Spreizglied gemäß der Linie III-III in Figur 1.

Figur 4 zeigt einen Schnitt durch den Stopfen im Bereich des Parallelverlaufes der Adern gemäß der Linie IV-IV in Figur 1.

Figur 5 zeigt den Übergangsbereich eines Zuleitungsbündels, das in ein Steckergehäuse längsdicht eingeführt ist.

Figur 6 und Figur 7 zeigen Varianten des Spreizstückes bei einem drei- bzw. fünfadrigem Leitungsbündel.

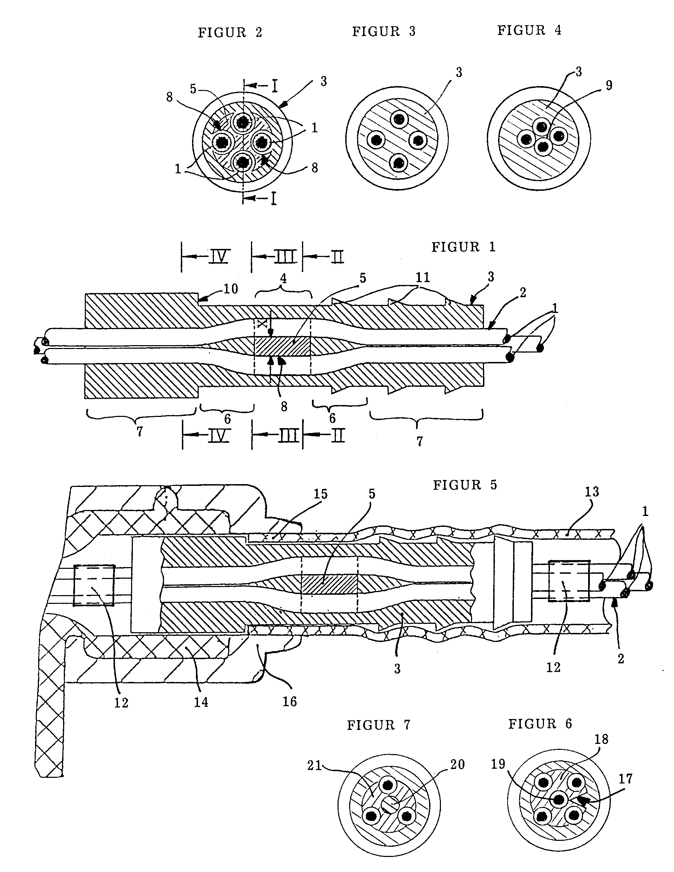

In den Figuren 1 bis 5 sind vier polyvinylchlorid-isolierte Adern 1 zu einem Aderbündel 2 gebündelt und mit einem im Durchmesser runden Stopfen 3 aus Polyurethan umspritzt. Im mittleren Bereich 4 des Stopfens 3 werden die Adern 1 von einem Spreizglied 5 aus Kunststoff auf Abstand X voneinander gehalten, während nach zwei sich anschließenden Übergangsbereichen 6 die Adern 1 in den Endbereichen 7 wieder aneinanderliegen.

Das Spreizglied 5 weist im Querschnitt im wesentlichen Kreisform auf, vergleiche Figur 2, und nimmt in axialen Nuten 8 je eine Ader 1 auf, wobei die Abmessungen so abgestimmt sind, daß die Adern 1 in die Nuten 8 leicht klemmend geführt bzw. eingepaßt sind, vergleiche Figur 2. In den Übergangsbereichen 6 ist der gesamte Querschnittsraum zwischen den Adern 1 mit Masse des Stopfens 3 ausgefüllt, vergleiche Figur 3. In den Endbereichen 7 liegen die Adern 1 parallel aneinander an. Dadurch kann sich zwar eventuell ein zentraler, hohler Innenzwickel 9 bilden; dieser endet jedoch spätestens im Übergangsbereich 6, da das Material des Stopfens 5 beim Spritzen das Bestreben hat, vom Übergangsbereich 6 aus in den Innenzwickel 9 einzudringen und diesen auch in den Endbereichen 7 auszufüllen.

Das Material des Stopfens 3 besteht aus einem massiven oder geschlossenzelligen, vorzugsweise weichem Polyurethan.

Der Stopfen 3 ist gestuft ausgebildet; der linke Endteil 7, der etwa 1/3 der Länge des Stopfens 3 ausmacht, weist einen größeren Durchmesser auf, als die übrigen Bereiche, so daß sich ein Absatz 10 ergibt. Am Teil des Stopfens mit geringerem Durchmesser, in der Figur 1 rechts, sind dem Außendurchmesser drei umlaufende sägezahnförmige Erhebungen 11 angeformt, deren Zweck zu Figur 5 noch erläutert wird.

Die Herstellung eines Stopfen 3 und seine Anwendung bei einer steckereinführung wird anhand der Figur 5 erläutert. Zunächst werden die vier Adern 1 parallel zueinander gebündelt und mittels zweier Klebebandwickel 12 axial und radial fixiert. Etwa im mittigen Bereich zwischen den Wickeln 12 wird ein Spreizglied 5 aus Kunststoff zwischen die Adern 1 eingebracht, vergleiche Figuren 1 und 2. Nach Einlegen in eine Spritzform und Umspritzen mit einem geeigneten Polyurethan ergibt sich der schon zu den Figuren 1 und 2 beschrieben Stopfen 3.

Über das rechte, nicht dargestellte Bündelende wird auf den Bereich mit dem kleineren Durchmesser des Stopfens 3 ein Schlauch 13 aufgeschoben, bis er an dem Absatz 10 anliegt. Dabei wirken die Erhebungen 11 als Widerhaken und Dichtungen. Die Leiter des ebenfalls nicht dargestellten linken Bündelendes werden nun mit Kontaktteilen verbunden und in eine Spritzform eingelegt, nachdem gegebenenfalls ein Innengehäuse 14 aufgeschoben wurde. In der Spritzform wird über den Stopfen 3 bis einschließlich über den linken Übergangsbereich 6 und über den Endbereich 15 des Schlauches 13 das Verbindergehäuse in Form einer massiven Tülle 16 umspritzt. Dabei ist es von Vorteil, wenn Stopfen 3, Schlauch 13 und Gehäuse 16 aus dem gleichen oder zumindest aus gleichartigem Material, also hier aus Polyurethan, gebildet werden, wobei das Material für den Stopfen 3 und den Schlauch 13 weich, für das Gehäuse 16 aber hart eingestellt ist.

In den Figuren 6 und 7 sind Varianten des Spreizgliedes aufgezeigt. Soll auch in der Mitte des Leitungsbündels eine Leitung angeordnet werden, so ist dies durch Anordnung eines axial durchlaufenden Schlitzes 17 im Spreizglied 18 möglich, durch den die mittlere Leitung 19 eingelegt werden kann, vergleiche Figur 6. Es ergibt sich dann ein Querschnittsbild entsprechend der Figur 2, wobei wiederum alle Leitungen im Übergangsbereich vom Material des Stopfens entsprechend der Figur 3 umgeben sind. Anstelle einer zentrischen Leitung kann auch ein Hohlraum 20 im Spreizglied 21 angeordnet werden, der dann von den Übergangsbereichen her mit Spritzmaterial ausgefüllt wird, vergleiche Figur 7.

## Patentansprüche

1. Verfahren zur Herstellung einer abgedichteten Durchführung oder Einführung eines Bündels (2) aus mindestens zwei Leitern, Adern (1), Leitungen oder dergleichen durch eine Trennwand bzw. in ein Gehäuse (16), bei der die Leiter oder dergleichen im Durch- oder Einführungsbereich mit Kunststoff rundum in Form eines Stopfens (3) umspritzt sind, in einem Bereich (4) des Stopfens (3) die Leiter (1) oder dergleichen auf Abstand (X) voneinander angeordnet sind, während in mindestens einem benachbarten Bereich des Stopfens (3) die Leiter (1) oder dergleichen aneinanderliegen und ein Spreizglied (5) aus Kunststoff zwischen den Leitern (1) oder dergleichen angeordnet ist, das axiale Nuten (8) zur Führung und/oder Klemmung der Leiter (1) oder dergleichen aufweist, dadurch gekennzeichnet, daß
a) ein gerades, loses Bündel (2) aus Leitern (1) oder dergleichen gebildet wird,
b) in einem vorbestimmten Abstand voneinander die Leiter (1) oder dergleichen des Bündels (2), z. B. mittels eines Bandwickels (12), radial und axial fixiert werden,
c) zwischen den fixierten Bündelstellen das Spreizglied (5) zwischen die Leiter (1) oder dergleichen eingebracht wird und
d) der gespreizte Bereich (4), die Übergangsbereiche (6) und die daran angrenzenden Außenbereiche (7) mit aneinanderliegegenden Leitern (1) oder dergleichen mit einem weichen Kunststoff umspritzt werden (Figur 1).

2. Verfahren nach Anspruch 1, dadurch gekennzeichnet, daß das Spreizglied (21) mit mindestens einem axial durchgehenden Hohlraum (20) versehen wird der vom Spritzmaterial mindestens teilweise gefüllt wird. (Figur 7).

3. Verfahren nach Anspruch 1 oder 2, dadurch gekennzeichnet, daß im Spreizglied mindestens ein axialer durchgehender Hohlraum angeordnet wird, im den ein Leiter (19) oder dergleichen eingelegt wird (Figur 6).

4. Verfahren nach Anspruch 3, dadurch gekennzeichnet, daß das Spreizglied (18) mit einem radialen Spalt (17) versehen und soweit flexibel ausgebildet wird, daß durch den Spalt (17) ein Leiter (19) oder dergleichen in den Hohlraum einlegbar ist (Figur 6).

5. Verfahren zur Herstellung eines längsdichten Zuleitungsbündels zu einer elektrischen Vorrichtung, wie z. B. einem Steckverbinder, unter Verwendung der Verfahren nach einem der Ansprüche 1 bis 4, dadurch gekennzeichnet, daß
a) dem Stopfen (3) ein Endbereich mit größerem Durchmesser angespritzt wird,
b) dem anderen Endbereich mit geringerem Durchmesser mehrere umlaufende, im Querschnitt sägezahnförmige Erhebungen (11) angespritzt werden,
c) über das Leitungsbündel (2) am Endbereich mit geringerem Durchmesser ein Schlauch (13) gezogen und über diesen Endbereich bis an den Endbereich mit größerem Durchmesser aufgeschoben wird und
d) das Leitungsbündel (2) am Endbereich mit größerem Durchmesser, ggf. nach einer Verbindung der Leiter mit Steckkontakten oder dergleichen, in eine Spritzgießform eingelegt und ein Gehäuse (16) gespritzt wird, wobei
e) das Gehäuse (16) bis über den Endbereich (15) des aufgeschobenen Schlauches (13) gespritzt wird (Figur 5).

6. Verfahren nach Anspruch 5, dadurch gekennzeichnet, daß für den Stopfen (3), den Schlauch (13) und das Gehäuse (16) der gleiche oder zumindest gleichartiger Kunststoff verwendet wird.

## Claims

1. A process for the production of a sealed feed-through or inlet bushing for a bundle (2) of at least two conductors, wires (1), cables or the like through a partition and/or into a housing (16), in which the conductors or the like are injection-coated with plastics material all round in the form of a stopper (3) in the feed-through or inlet region, the conductors (1) or the like are arranged at a distance (X) from one another in a region (4) of the stopper (3), whereas they are contiguous in at least one adjacent region of the stopper (3), and an expanding member (5) made of plastics material is arranged between the conductors (1) or the like, which has axial grooves (8) for guiding and/or clamping the conductors (1) or the like, **characterised in that**
a) a straight, loose bundle (2) of conductors (1) or the like is formed,
b) the conductors (1) or the like of the bundle (2) are fixed radially and axially at a predetermined distance from one another, e.g. by means of a tape reel (12),
c) the expanding member (5) is inserted between the conductors (1) or the like between the fixed bundle points, and
d) the expanded region (4), the transition regions (6) and the adjoining outer regions (7) with the contiguous conductors (1) or the like are injection-coated with a soft plastics material (Figure 1).

2. A process according to Claim 1, **characterised in that** the expanding member (21) is provided with at least one axially continuous cavity (20) which is filled at least partially by the injected material (Figure 7).

3. A process according to Claim 1 or 2, **characterised in that** at least one axially continuous cavity is arranged in the expanding member, a conductor (19) or the like being inserted into this cavity (Figure 6).

4. A process according to Claim 3, **characterised in that** the expanding member (18) is provided with a radial gap (17) and is flexible enough for a conductor (19) or the like to be inserted into the cavity through the gap (17) (Figure 6).

5. A process for the production of a longitudinally sealed lead-in bundle for an electrical device, e.g. a plug-and-socket connector, using the process according to any one of Claims 1 to 4**, characterised in that**
a) an end region with a larger diameter is injection-moulded on the stopper (3),
b) several circumferential projections (11), having the shape of saw teeth in cross-section, are injection-moulded on the other end region with the smaller diameter,
c) a tube (13) is drawn over the conductor bundle (2) at the end region with the smaller diameter and is pushed over this end region up to the end region with the larger diameter, and
d) the conductor bundle (2) is inserted into an injection mould at the end region with the larger diameter, if applicable after connecting the conductors to plug contacts or the like, and a housing (16) is injection moulded,
e) the housing (16) being injection moulded over the end region (15) of the pushed-on tube (13) (Figure 5).

6. A process according to Claim 5, **characterised in that** the same or at least a similar plastics material is used for the stopper (3), the tube (13) and the housing (16).

## Revendications

1. Procédé de fabrication d'une traversée ou entrée étanche, respectivement à travers une cloison séparatrice ou dans un boitier (16), d'un faisceau (2) comprenant au moins deux fils, brins (1), conducteurs ou éléments similaires, dans laquelle les brins ou éléments similaires sont enrobés par injection, dans la zone de traversée ou d'entrée, par une matière plastique revêtant circonférentiellement la forme d'un bouchon (3) ; les brins (1) ou éléments similaires se trouvent à distance (X) les uns des autres dans une région (4) du bouchon (3), tandis que les brins (1) ou éléments similaires sont appliqués les uns contre les autres dans au moins une région adjacente du bouchon (3) ; et un organe d'écartement (5) en matière plastique, interposé entre les brins (1) ou éléments similaires, présente des gorges axiales (8) pour le guidage et/ou le coincement des brins (1) ou éléments similaires,
caractérisé par le fait
a) qu'il est formé un faisceau rectiligne lâche (2), constitué de brins (1) ou éléments similaires,
b) que les brins (1) ou éléments similaires du faisceau (2) sont radialement et axialement consignés à demeure, à une distance prédéterminée les uns des autres par exemple au moyen d'un enroulement de ruban (12),
c) que l'organe d'écartement (5) est inséré, entre les brins (1) ou éléments similaires, entre les zones du faisceau consignées à demeure et
d) que la région écartée (4), les zones de transition (6) et les régions externes (7) limitrophes, présentant des brins (1) ou éléments similaires appliqués les uns contre les autres, sont enrobées par injection à l'aide d'une matière plastique tendre (figure 1).

2. Procédé selon la revendication 1, caractérisé par le fait que l'organe d'écartement (21) est muni d'au moins une cavité (20) ininterrompue dans le sens axial, qui est comblée au moins partiellement par le matériau injecté (figure 7).

3. Procédé selon la revendication 1 ou 2, caractérisé par le fait qu'au moins une cavité axiale ininterrompue, dans laquelle un conducteur (19) ou élément similaire est inséré, est ménagée dans l'organe d'écartement (figure 6).

4. Procédé selon la revendication 3, caractérisé par le fait que l'organe d'écartement (18) est muni d'une encoche radiale (17) et est réalisé doué d'une souplesse telle qu'un conducteur (19) ou élément similaire puisse être inséré dans la cavité, par l'intermédiaire de l'encoche (17) (figure 6).

5. Procédé de fabrication d'un faisceau de conducteurs d'amenée étanche longitudinalement et gagnant un dispositif électrique, comme par exemple un connecteur enfichable, en appliquant le procédé selon l'une des revendications 1 à 4, caractérisé par le fait
a) qu'une région extrême de diamètre supérieur est rapportée par injection sur le bouchon (3),
b) que plusieurs protubérances périphériques (11) de section transversale en dents de scie sont rapportées, par injection, sur l'autre région extrême de diamètre plus faible,
c) qu'une gaine souple (13) est emboîtée sur le faisceau (2) de conducteurs, dans la région extrême de diamètre plus faible, puis est enfilée sur cette région extrême, jusqu'à la région extrême de diamètre supérieur, et
d) que le faisceau (2) de conducteurs est introduit dans un moule de coulée par injection dans la région extrême de diamètre supérieur éventuellement après une connexion des brins avec des contacts enfichables ou éléments similaires, puis un boîtier (16) est injecté,
procédé dans lequel
e) le boîtier (16) est injecté jusque sur la zone d'extrémité (15) de la gaine souple (13) enfilée (figure 5).

6. Procédé selon la revendication 5, caractérisé par le fait qu'on utilise, pour le bouchon (3), la gaine souple (13) et le boîtier (16), la même matière plastique ou au moins une matière plastique d'un même type.
